# FASCICULE DE BREVET EUROPEEN

(11) **EP 0 665 368 B1**
(45) Date de publication et mention de la délivrance du brevet: **22.07.1998**
(21) Numéro de dépôt: 95400152.5
(22) Date de dépôt: 24.01.1995
(51) Int. Cl.: F02D 9/02, B60K 28/16

(54) **Corps de commande de gaz à fermeture par système de sécurité, tel qu'antipatinage**
Von einem Sicherheitssystem, insbesondere einem Antischlupfregelsystem geschlossene Drosselklappe
Throttle valve device with safety closing means, in particular traction control

(30) Priorité: 27.01.1994 FR 9400890
(43) Date de publication de la demande: 02.08.1995
(73) Titulaire: MAGNETI MARELLI FRANCE, 92000 Nanterre (FR)
(72) Inventeur: Joigneau, Jean-Pierre, F-78580 Maule (FR)
(74) Mandataire: Bérogin, Francis

(56) Documents cités:
- EP-A- 0 315 794
- US-A- 4 867 122
- US-A- 5 107 811
- US-A- 5 168 951
- PATENT ABSTRACTS OF JAPAN vol. 15 no. 386 (M-1163) ,30 Septembre 1991 & JP-A-03 156134 (MITSUBISHI MOTORS CORP) 4 Juillet 1991,
- PATENT ABSTRACTS OF JAPAN vol. 15 no. 120 (M-1096) ,25 Mars 1991 & JP-A-03 011132 (NIPPONDENSO CO LTD) 18 Janvier 1991,
- PATENT ABSTRACTS OF JAPAN vol. 17 no. 21 (M-1353) ,14 Janvier 1993 & JP-A-04 246245 (MIKUNI CORP) 2 Septembre 1992,

## Description

L'invention concerne un corps de commande de gaz, pour un moteur à combustion interne, à injection ou à carburateur, de véhicule muni d'au moins un système de sécurité, tel qu'un antipatinage, limiteur ou régulateur de vitesse, qui commande prioritairement la fermeture du corps par un obturateur tel qu'un papillon, lorsque ce système de sécurité est activé, alors que la position de la pédale d'accélérateur tend à commander l'ouverture du corps par l'obturateur ou papillon.

On sait que les moteurs à combustion interne, du type à injection ou à carburateur, sont alimentés respectivement en air ou en air carburé, par un corps de commande de gaz, appelé respectivement corps de papillon ou corps de carburateur, traversé par au moins un conduit dans lequel au moins un obturateur en forme de disque, appelé papillon, est monté rotatif sur un axe transversal, dont une extrémité, en saillie hors du corps, est entraînée en rotation par un organe menant. Ce dernier est, le plus souvent, une came de commande de gaz, souvent limitée à un secteur angulaire, actionnée en rotation, dans le sens de l'ouverture du papillon, par un câble de traction sensible à l'enfoncement de la pédale d'accélérateur.

Par sécurité, l'équipage mobile constitué de l'obturateur ou papillon rotatif, de l'axe transversal et de la came de commande de gaz est rappelé vers la position de fermeture (en général non totale) de l'obturateur par deux sources d'énergie de rappel différentes, en général un premier et un second ressort hélicoïdal.

Pour éviter le patinage des roues d'un véhicule sur le sol, lorsque le couple moteur transmis aux roues motrices du véhicule est trop élevé compte tenu de l'adhérence des roues au sol, c'est-à-dire lorsque la puissance délivrée par le moteur, et donc aussi l'alimentation en gaz du moteur, est trop importante, il est nécessaire de réduire cette puissance motrice, ce qui peut être obtenu par une modulation de l'allumage et/ou une réduction de l'injection de carburant ainsi que de l'alimentation en gaz du moteur, pour retrouver un niveau de puissance compatible avec l'adhérence des roues motrices.

A cet effet, il a déjà été proposé d'équiper les véhicules automobiles d'un système d'antipatinage, comprenant au moins un détecteur de patinage de roues et un calculateur associé, commandant notamment un actionneur spécifique, qui, lorsque le système est activé, commande prioritairement la réduction du débit d'alimentation du moteur en air ou air carburé.

Pour réduire ce débit de gaz d'admission, plusieurs solutions ont déjà été proposées : l'une consiste à monter, sur la conduite d'admission, et en série avec le corps de papillon ou de carburateur, un second corps analogue, dont l'obturateur rotatif est pivoté par l'actionneur spécifique du dispositif d'antipatinage, dans le sens de la fermeture de ce second corps, lorsque l'antipatinage est activé, indépendamment de la position occupée par l'obturateur dans le corps de papillon ou de carburateur, en fonction de la position de la pédale d'accélérateur. Cette solution a pour inconvénient d'être coûteuse, car il faut doubler les moyens habituellement utilisés pour régler le débit de gaz d'admission.

La seconde solution connue consiste, avec l'actionneur spécifique du système d'antipatinage, à commander la refermeture du papillon ou de l'obturateur du corps de papillon ou de carburateur à l'aide d'une seconde came menante, dite came d'anti-patinage, également rappelée dans le sens de fermeture de l'obturateur par un ressort de sécurité, et entraînée en rotation, dans le sens de la fermeture de l'obturateur, par un câble de traction manoeuvré par l'actionneur spécifique du système d'antipatinage. Un ressort supplémentaire a de plus pour effet de tendre le câble d'entraînement de la came d'antipatinage. Un autre ressort au moins est encore prévu pour entraîner conjointement la came de commande de gaz et la came d'antipatinage, en fonction de la position de la pédale d'accélérateur, tant que le système d'antipatinage ne commande pas la rotation de la came d'antipatinage dans le sens de la refermeture du papillon, à l'encontre de ce dernier ressort.

Comme l'une des deux cames de commande de gaz et d'antipatinage est montée sur une extrémité de l'axe de rotation, d'un côté du corps, tandis que l'autre came est montée sur l'autre extrémité de l'axe, en saillie de l'autre côté du corps, l'entraînement conjoint des deux cames, lorsqu'il est nécessaire, est assuré par un mécanisme comportant de nombreuses pièces de transmission de mouvement, telles que bagues, leviers, rondelles, biellettes de liaison, etc ...

Il en résulte que ces dispositifs sont complexes, coûteux et encombrants. De plus, ils manquent de fiabilité et présentent un grand hystérésis en fonctionnement, en raison du grand nombre de pièces en mouvement.

Pour remédier à ces inconvénients, il a déjà été proposé par US-A-5,107,811 un corps de commande de gaz pour moteur à combustion interne de véhicule automobile équipé d'au moins un système de sécurité, tel qu'un système d'antipatinage, et du type comprenant :
- un corps, traversé d'au moins un conduit dans lequel au moins un obturateur, sensiblement en forme de disque ou papillon, est monté en rotation avec un axe transversal au conduit,
- une came de commande de gaz, montée en rotation coaxialement à l'axe transversal, à l'extérieur et sur un côté du corps, et entraînée en rotation par un organe de commande de gaz, tel qu'un câble de traction, lorsque la pédale d'accélérateur est enfoncée, en entraînant elle-même l'axe et l'obturateur en rotation dans le sens de l'ouverture du conduit, à l'encontre de deux ressorts de rappel de l'obturateur en rotation dans le sens de la fermeture du conduit, et
- une came de refermeture de sécurité, également montée en rotation coaxialement à l'axe transversal, à l'extérieur et sur ledit côté du corps, et entraînée en rotation, d'une part, dans le sens de l'ouverture du conduit, conjointement avec la came de commande de gaz et l'obturateur, par l'effet d'un ressort de liaison et à l'encontre de l'un des deux ressorts de rappel de l'obturateur dans le sens de la fermeture du conduit, ledit ressort constituant un ressort de rappel et de mise en tension d'un organe de refermeture reliant la came de refermeture à un actionneur du système de sécurité, et, d'autre part, dans le sens de la fermeture du conduit, conjointement avec l'obturateur et indépendamment de la came de commande de gaz, à l'encontre du ressort de liaison et par l'effet de l'actionneur de sécurité exerçant une traction sur l'organe de refermeture, lorsque le système de sécurité est activé.

Cette position des deux cames, parallèles et sensiblement côte-à-côte sur un même côté du corps, ainsi que l'utilisation d'un même ressort pour assurer à la fois la fonction de rappel de l'obturateur dans le sens de la fermeture du conduit et de rappel de la came de refermeture et de mise en tension de son organe de traction, permettent de diminuer le nombre de ressorts et de pièces de transmission de mouvements nécessaires dans les réalisations de l'état de la technique.

L'invention a pour objet de proposer un tel corps de commande de gaz, de structure simple, de fonctionnement fiable, de fabrication économique et d'encombrement plus réduit que la réalisation selon US-A-5,107,811.

A cet effet, le corps de commande de gaz de l'invention, du type connu par US-A-5,107,811, se caractérise en ce que le ressort de liaison est monté entre la came de commande de gaz et un embout, solidaire d'une portion de l'axe de l'obturateur qui fait saillie sur ledit côté du corps, et le ressort de rappel de la came de refermeture est monté entre cette dernière et l'embout . De la sorte, le ressort de liaison permet de désolidariser la came de commande de gaz, d'une part, de la came de refermeture et de l'axe de l'obturateur, d'autre part, lors de la refermeture de l'obturateur par le système de sécurité.

Selon une structure simple, fiable et économique, l'embout de l'axe de l'obturateur est disposé entre les deux cames, et la came de refermeture est montée en rotation autour de ladite portion de l'axe d'obturateur en saillie vers l'extérieur du corps.

Avantageusement, la came de commande de gaz est découplée de l'axe de l'obturateur par le fait que cette came est montée en rotation sur un tronçon d'axe qui est coaxial à l'axe de l'obturateur et porté par un support solidaire du corps, le second ressort de rappel de l'obturateur dans le sens de la fermeture du conduit étant monté entre la came de commande de gaz et le support.

Ce découplage entre l'axe de l'obturateur et la came de commande de gaz permet, en reliant la came de refermeture par son ressort de rappel à l'axe de l'obturateur, de rendre la came de refermeture indépendante de la fonction de commande de gaz, ce qui procure une réduction importante de l'hystérésis par la réduction du nombre de pièces mises en mouvement lors de la refermeture de l'obturateur par le système de sécurité.

De plus, les mouvements rotatifs des deux cames sont de préférence limités de la manière suivante :
- l'embout porte un levier venant, en position de fermeture maximum de l'obturateur, en appui contre une butée de ralenti portée par le corps,
- la came de commande de gaz présente un bras venant, en position d'ouverture maximum de l'obturateur, en appui contre une butée de débit maximum de gaz portée par le support,
- le corps présente une butée, en saillie du côté des cames, pour limiter la course angulaire de la came de refermeture.

En outre, la came de commande de gaz présente avantageusement une butée excentrée en saillie axiale vers l'axe de l'obturateur, et qui vient en appui contre une butée excentrée en saillie axiale sur l'axe de l'obturateur, pour l'entraînement positif de ce dernier par la came de commande de gaz, dans le sens de l'ouverture du conduit.

Dans une forme de réalisation avantageusement simple des ressorts, les deux ressorts de rappel de l'obturateur dans le sens de la fermeture du conduit et le ressort de liaison sont des ressorts hélicoïdaux (de préférence de torsion), tels que le ressort de liaison présente une raideur supérieure au couple résistant créé par la pression dynamique du gaz sur l'obturateur.

Dans une réalisation économique, chacune des deux cames peut être en matière plastique et limitée à un secteur circulaire, et l'embout de l'axe de l'obturateur peut être un surmoulage en matière plastique.

D'autres avantages et caractéristiques de l'invention découleront de la description donnée ci-dessous, à titre non limitatif, d'un exemple de réalisation décrit en référence aux dessins sur lesquels :

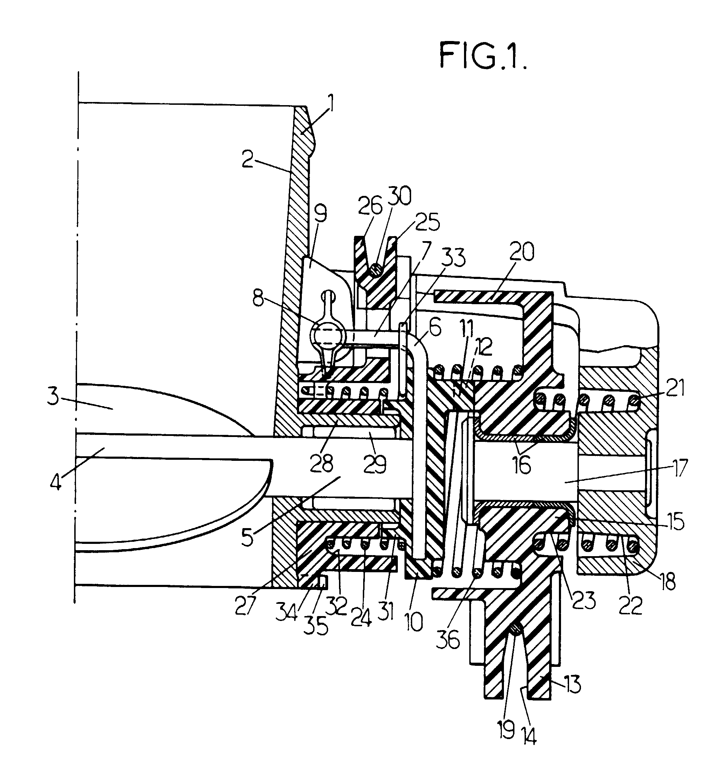

- la figure 1 représente un corps de commande de gaz en coupe par l'axe du conduit et l'axe de rotation de l'obturateur, et

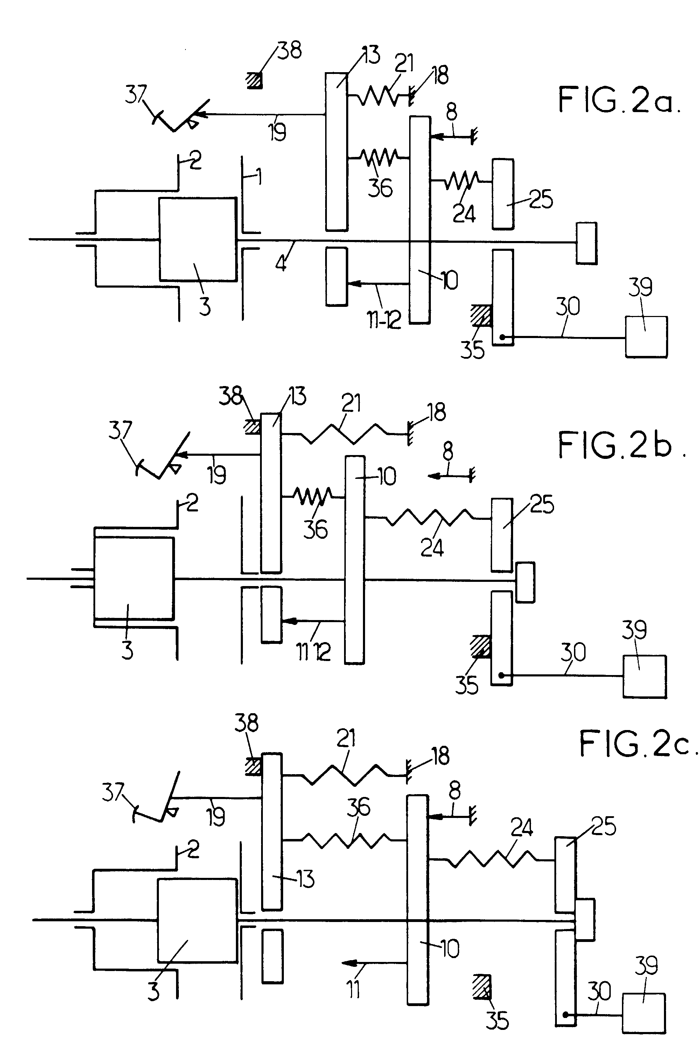

- les figures 2a, 2b et 2c sont des schémas synoptiques expliquant le fonctionnement du dispositif de la figure 1, respectivement en position de ralenti, avec système d'antipatinage inactif pour la figure 2a, en position de pleine charge avec antipatinage inactif pour la figure 2b, et en position de refermeture lorsque l'antipatinage est en action, pour la figure 2c, les rotations relatives des composants du corps de commande de gaz de la figure 1 ayant été représentées sur ces figures par des translations axiales relatives.

Les figures 1 et 2a à 2c concernent un corps de commande de gaz monocorps, à un seul conduit dans lequel pivote un seul obturateur.

Le corps de commande de gaz de la figure 1 est un corps de papillon, comprenant un corps 1 proprement dit, qui se monte sur une conduite d'alimentation en air d'un moteur à injection d'un véhicule automobile équipé d'un système d'antipatinage. Le corps 1 est traversé par un conduit 2, dans lequel un obturateur 3, en forme de disque circulaire ou papillon, est monté en rotation avec un axe transversal 4. Cet axe 4 est monté tourillonnant dans le corps 1 par deux portions d'extrémité, faisant chacune saillie vers l'extérieur du corps, et logée chacune dans l'un de deux paliers coaxiaux et diamétralement opposés par rapport à l'axe du conduit 2.

Sur la figure 1, une portion d'extrémité 5 de l'axe 4 supporte un levier 6, transversal à l'axe 4, et dont une extrémité est recourbée parallèlement à l'axe 4 pour former une butée 7, limitant la rotation du papillon 3 dans le sens de la fermeture du conduit 2 par appui contre une butée de ralenti 8, constituée par exemple par une vis réglable sur un bossage 9 en saillie latérale vers l'extérieur du corps 1. L'appui du levier 6 contre la butée de ralenti 8 permet de définir une position réglable de fermeture non complète du conduit 2 par le papillon 3, pour définir un débit minimum d'air suffisant au fonctionnement du moteur au ralenti.

La partie transversale du levier 6 est noyée dans un embout 10, essentiellement radial par rapport à l'axe 4, et réalisée par surmoulage de matière plastique autour de l'extrémité libre de la portion d'axe 5. Du côté opposé au corps 2, l'embout 10 présente une butée axiale excentrée 11, contre laquelle prend appui une butée axiale excentrée 12 d'une came de commande de gaz 13, lorsque cette dernière est entraînée en rotation dans un sens qui commande, par la coopération des butées 11 et 12, la rotation de l'axe 4 et du papillon 3 dans le sens de la fermeture du conduit 2.

Cette came 13 est une pièce essentiellement radiale par rapport à l'axe 4, et est moulée en matière plastique en formant une came à gorge radiale 14 s'étendant seulement sur un secteur circulaire. La came 13 est montée en rotation par son moyeu 15, et à l'aide de bagues anti-frottement 16, autour d'un tronçon d'axe 17, coaxial et dans le prolongement de l'axe 4, et porté par un étrier 18 solidaire du corps 1.

La came 13 est actionnée par un organe de traction, tel qu'un câble de commande de gaz 19, partiellement enroulé dans la gorge 14 de la came 13, et dont une extrémité est retenue dans une extrémité de cette gorge 14. L'autre extrémité du câble 19 est reliée, directement ou indirectement, à la pédale d'accélérateur du véhicule. La came 13 présente également, en saillie radiale vers l'extérieur, un bras coudé 20 formant une butée et limitant la rotation de la came 13, lorsqu'une traction est exercée sur le câble de commande de gaz 19 par enfoncement de la pédale d'accélérateur, dans la position d'ouverture maximum du papillon 3 dans le corps 1, par appui de cette butée 20 de la came 13 contre une butée "plein gaz" prévue sur l'étrier 18. Le rappel de la came de commande de gaz 13 vers la position de ralenti ou de fermeture du papillon 3 dans le corps 1, en cas de relâchement de la pédale d'accélérateur, ou de rupture du câble 19, est assuré par deux ressorts hélicoïdaux de torsion, dont un premier 21 est monté entre l'étrier 18 et la came 13, en prenant appui, par ses extrémités, contre les fonds de deux gorges annulaires 22 et 23, en regard l'une de l'autre, ménagées respectivement dans l'étrier 18 et dans le moyeu 15 de la came 13, coaxialement aux axes 4 et 17.

L'autre ressort de rappel de la fonction commande de gaz vers le ralenti ou la fermeture du papillon 3 est un ressort 24 monté entre l'embout 10 et une seconde came 25, qui est une came de commande de la refermeture du papillon 3 dans le corps 1 en cas de patinage, et qui, pour cette raison, est appelée came de refermeture ou came d'antipatinage.

Comme la came de commande de gaz 13, la came d'antipatinage 25 est essentiellement radiale et constituée d'une pièce moulée en matière plastique avec une gorge radiale 26 ne s'étendant que sur un secteur circulaire, autour d'un moyeu de came 27 par lequel la came 25 est montée rotative, coaxialement aux axes 4 et 17, autour d'un manchon 28 solidaire du corps 1 et en saillie latérale vers l'extérieur de ce dernier, et formant un palier logeant, de préférence, un roulement 29 pour la rotation de l'axe 4 et du papillon 3 dans le corps 1.

La rotation de la came de refermeture 25 autour de l'axe 4 est commandée par traction sur un câble de commande de refermeture 30, logé partiellement dans la gorge 26, et dont une extrémité est retenue dans une extrémité de cette gorge, l'autre extrémité du câble de traction 30 étant actionnée par un actionneur du système d'antipatinage, pour commander la rotation de la came 25 dans le sens de la fermeture du conduit 2 par le papillon 3, lorsqu'un patinage des roues du véhicule est détecté.

Le ressort 24, coaxial aux axes 4 et 17, comme les cames 13 et 25 et le ressort 21, prend appui, par une extrémité, contre la face radiale de l'embout 10, du côté opposé à la came 13, et autour d'une collerette 31 coaxiale de centrage, en saillie sur l'embout 10 vers le corps 1, et par son autre extrémité contre le fond d'une gorge annulaire coaxiale 32 ménagée dans le moyeu 27 de la came 25. L'extrémité du ressort 24 contre l'embout 10 se prolonge par un doigt radial 33, qui interfère avec l'extrémité coudée du levier 6 de l'axe 4. Le ressort 24, qui rappelle, par son action sur l'embout 10 et le levier 6, l'axe 4 et le papillon 3 dans le sens de la fermeture du conduit 2, assure également la mise en tension du câble 30 de commande de refermeture par antipatinage, et rappelle la came de refermeture 25, dont le moyeu 27 porte une butée radiale externe 34, vers une butée de ralenti de sécurité 35 en saillie latérale sur le corps 1.

De plus, un troisième ressort 36 hélicoïdal de torsion, coaxial aux axes 4 et 17, appelé ressort de liaison ou d'embrayage-débrayage, est monté entre la face radiale de l'embout 10, du côté opposé au corps 1, et la came 13, sur laquelle il s'appuie autour du moyeu 15, ce ressort 36 étant d'une raideur supérieure au couple résistant créé par la pression dynamique du gaz dans le conduit 2 sur l'obturateur 3.

La structure décrite ci-dessus est simple, compacte, fiable et économique, car elle ne comporte que six pièces mobiles, à savoir le papillon 3 avec l'axe 4 et son embout 10 avec levier 6, la came 13 de commande de gaz, la came 25 d'antipatinage, et les trois ressorts 21, 24 et 36. Par le montage de la came 13 sur le tronçon d'axe 17 non lié à l'axe 4, cette structure assure le découplage entre la came de commande de gaz 13 et l'axe 4 du papillon 3. Ainsi, la came de refermeture 25, de l'autre côté de l'embout 10 par rapport à la came de commande de gaz 13, et entraînée avec l'embout 10 et l'axe 4 par le ressort 24 et, dans le sens de l'ouverture du papillon 3, par la coopération du doigt 33 et du levier 6, est ainsi indépendante de la fonction de commande de gaz, ce qui réduit l'hystérésis de la commande de refermeture du papillon 3 en cas de patinage.

En fonctionnement normal, sans patinage, le ressort de liaison 36 permet l'entraînement de l'embout 10 et de l'axe 4, et donc aussi de la came de refermeture 25, avec la came de commande de gaz 13, dans le sens de la fermeture du papillon 3, sous l'effet des ressorts de rappel 21 et 24, ou dans le sens de l'ouverture du papillon 3, avec dans ce cas l'entraînement positif de l'embout 10 par la came 13 grâce à la coopération des butées 11 et 12, et de la came de refermeture 25 par l'embout 10 par la coopération du levier 6 et du doigt 33.

Si un patinage est détecté alors que le papillon 3 est ouvert par suite d'une traction exercée sur le câble de commande de gaz 19 par enfoncement de la pédale d'accélérateur, l'actionneur d'antipatinage commande une traction sur le câble 30 qui fait tourner la came 25 de sorte que par la coopération du doigt 33 et du levier 6, l'embout 10 et l'axe 4 sont tournés dans le sens de la refermeture du papillon 3, à l'encontre du ressort 36, qui est chargé et permet ainsi un débrayage ou une désolidarisation de mouvement entre les deux cames 25 et 13.

Le fonctionnement du dispositif est représenté sur les schémas synoptiques des figures 2a, 2b et 2c, sur lesquels les mêmes éléments que sur la figure 1, repérés par les mêmes références, sont animés de translations relatives correspondant aux rotations relatives sur la figure 1. La pédale d'accélérateur 37, la butée "plein gaz" 38 et l'actionneur 39 du système d'antipatinage ont également été schématisés.

L'antipatinage étant inactivé et la commande de gaz au ralenti (figure 2a), les deux ressorts de rappel de commande de gaz 21 et 24 sont déchargés, ainsi que le ressort de liaison 36, l'axe 4 et l'embout 10 sont contre la butée de ralenti 8 et le papillon 3 en position de fermeture dans le conduit 2, la pédale d'accélérateur 37 est relâchée, la came de commande de gaz 13 en appui par les butées 11 et 12 sur l'embout 10, et la came d'antipatinage 25 à proximité immédiate de sa butée 35, le câble de refermeture 30 n'étant pas tiré par l'actionneur 39.

En position de pleine charge du moteur (figure 2b) et en l'absence de patinage, la pédale d'accélérateur 37 enfoncée tire le câble 19 qui déplace la came 13 de commande de gaz jusque contre la butée 38 de "plein gaz", à l'encontre du ressort de rappel 21, la came 13 entraînant avec elle l'embout 10, l'axe 4 et le papillon 3, qui ouvre ainsi le passage 2 dans le corps 1, grâce au ressort de liaison 36 et à la coopération des butées 11 et 12. L'embout 10 et l'axe 4 sont écartés de la butée de ralenti 8, à l'encontre également du ressort de rappel 24, alors qu'aucune traction n'est exercée sur le câble de refermeture 30 par l'actionneur 39 d'antipatinage.

A partir de cette configuration, si un patinage des roues est détecté, le dispositif adopte la configuration de la figure 2c, l'actionneur 39 exerçant une traction sur le câble 30 qui entraîne la came de refermeture 25 et avec elle, l'embout 10 et l'axe 4, et donc aussi l'obturateur 3 amené en position de fermeture du conduit 2. Par contre, la pédale d'accélérateur 37 restant enfoncée, le câble 19 est toujours tiré de façon à maintenir la came de commande de gaz 13 contre la butée plein gaz 38, la désolidarisation de mouvement entre la came de commande de gaz 13 et l'embout 10 de l'axe 4 étant assurée par la charge du ressort de liaison 36, qui assure ainsi un débrayage. L'embout 10 est ainsi ramené contre la butée de ralenti 8, la coopération entre les butées 11 et 12 est supprimée, et les ressorts de rappel 21 et 24 restent chargés, de sorte à assurer le rappel de la came 13 de commande de gaz dès le relâchement de la pédale 37. En fin de patinage, avec l'assistance du ressort 36, les deux cames 13 et 25 sont ramenées dans la configuration de la figure 2a. Mais si la pédale d'accélérateur 37 reste enfoncée, à la fin du patinage, le dispositif peut passer de la configuration de la figure 2c à celle de la figure 2b. Le dispositif compact, simple et économique de la figure 1 permet ainsi de remplir de manière plus fiable et avec moins d'hystérésis les fonctions de commande de gaz et de commande de refermeture de sécurité du papillon, par comparaison avec les réalisations analogues de l'état de la technique.

## Revendications

1. Corps de commande de gaz, pour moteur à combustion interne de véhicule automobile équipé d'au moins un système de sécurité, tel qu'un système d'antipatinage, ledit corps de commande de gaz comprenant :
- un corps (1), traversé d'au moins un conduit (2) dans lequel au moins un obturateur (3), sensiblement en forme de disque ou papillon, est monté en rotation avec un axe (4) transversal au conduit (2),
- une came (13) de commande de gaz, montée en rotation coaxialement à l'axe transversal (4), à l'extérieur et sur un côté du corps (1), et entraînée en rotation par un organe de commande de gaz (19), tel qu'un câble de traction, lorsque la pédale d'accélérateur (37) est enfoncée, en entraînant elle-même l'axe (4) et l'obturateur (3) en rotation dans le sens de l'ouverture du conduit (2), à l'encontre de deux ressorts de rappel (21, 24) de l'obturateur (3) en rotation dans le sens de la fermeture du conduit (2), et
- une came (25) de refermeture de sécurité, également montée en rotation coaxialement à l'axe (4) transversal, à l'extérieur et sur ledit côté du corps (1), et entraînée en rotation, d'une part, dans le sens de l'ouverture du conduit (2), conjointement avec la came (13) de commande de gaz et l'obturateur (3), par l'effet d'un ressort (36) de liaison et à l'encontre de l'un (24) des deux ressorts (21, 24) de rappel de l'obturateur (3) dans le sens de la fermeture du conduit (2), ledit ressort constituant un ressort (24) de rappel et de mise en tension d'un organe (30) de refermeture reliant la came (25) de refermeture à un actionneur (39) du système de sécurité, et, d'autre part, dans le sens de la fermeture du conduit (2), conjointement avec l'obturateur (3) et indépendamment de la came (13) de commande de gaz, à l'encontre du ressort de liaison (36) et par l'effet de l'actionneur (39) de sécurité exerçant une traction sur l'organe de refermeture (30), lorsque le système de sécurité est activé, caractérisé en ce que le ressort de liaison (36) est monté entre la came de commande de gaz (13) et un embout (10), solidaire d'une portion (5) de l'axe (4) de l'obturateur (3) qui fait saillie sur ledit côté du corps (1), et le ressort de rappel (24) de la came de refermeture (25) est monté entre cette dernière et l'embout (10).

2. Corps de commande de gaz selon la revendication 1, caractérisé en ce que l'embout (10) est disposé entre les deux cames (13, 25), et la came de refermeture (25) est montée en rotation autour de ladite portion (5) de l'axe (4) d'obturation (3) en saillie vers l'extérieur du corps (1).

3. Corps de commande de gaz selon l'une des revendications 1 et 2, caractérisé en ce que l'embout (10) porte un levier (6) venant, en position de fermeture maximum de l'obturateur (3), en appui contre une butée de ralenti (8) portée par le corps (1).

4. Corps de commande de gaz selon l'une des revendications 1 à 3, caractérisé en ce que la came (13) de commande de gaz est montée en rotation sur un tronçon d'axe (17) qui est coaxial à l'axe (4) de l'obturateur (3) et porté par un support (18) solidaire du corps (1), le second ressort de rappel (21) de l'obturateur (3) dans le sens de la fermeture du conduit (2) étant monté entre la came de commande de gaz (13) et le support (18).

5. Corps de commande de gaz selon la revendication 4, caractérisé en ce que la came de commande de gaz (13) présente un bras (20) venant, en position d'ouverture maximum de l'obturateur (3), en appui contre une butée (38) de débit maximum de gaz portée par le support (18).

6. Corps de commande de gaz selon l'une des revendications 4 et 5, caractérisé en ce que la came de commande de gaz (13) présente une butée (12) excentrée et en saillie axiale vers l'axe (4) de l'obturateur (3), et qui vient en appui contre une butée (11) excentrée en saillie axiale sur l'axe (4) de l'obturateur (3), pour l'entraînement positif de ce dernier par la came de commande de gaz (13), dans le sens de l'ouverture du conduit (2).

7. Corps de commande de gaz selon l'une quelconque des revendications 1 à 6, caractérisé en ce que le corps (1) présente une butée (35), en saillie du côté des cames (13, 25), pour limiter la course angulaire de la came de refermeture (25).

8. Corps de commande de gaz selon l'une quelconque des revendications 1 à 7, caractérisé en ce que les deux ressorts de rappel (21, 24) de l'obturateur (3) dans le sens de la fermeture du conduit (2) et le ressort de liaison (36) sont des ressorts hélicoïdaux tels que le ressort de liaison (36) présente une raideur supérieure au couple résistant créé par la pression dynamique du gaz sur l'obturateur (3).

9. Corps de commande de gaz selon l'une quelconque des revendications 1 à 8, caractérisé en ce que chacune des deux cames (13, 25) est en matière plastique et limitée à un secteur circulaire, et l'embout (10) de l'axe (4) de l'obturateur (3) est un surmoulage en matière plastique.

## Patentansprüche

1. Drosselklappenkörper für einen Verbrennungsmotor eines mit wenigstens einem Sicherheitssystem, insbesondere einem Antischlupfsystem, ausgestatteten Kraftfahrzeugs, wobei der Drosselklappenkörper umfaßt:
- einen Körper (1), der von wenigstens einem Kanal (2) durchsetzt ist, in welchem wenigstens eine Verschlußvorrichtung im wesentlichen in Form einer Scheibe oder Klappe um eine quer zum Kanal (2) verlaufende Achse (4) drehbar angebracht ist,
- einen Betätigungsnocken (13), der außerhalb und auf einer Seite des Körpers (1) koaxial zur Querachse (4) drehbar angebracht ist und von einem Antriebselement (19), insbesondere einem Zugseil, drehangetrieben wird, wenn das Gaspedal (37) heruntergetreten wird, indem er die Achse (4) und die Verschlußvorrichtung (3) in Richtung zum Öffnen des Kanals (2) gegen zwei Federn (21, 24) zum Rückstellen der Verschlußvorrichtung (3) in Richtung zum Verschließen des Kanals (2) drehantreibt, und
- einen Sicherheitsschließnocken (25), der gleichfalls außerhalb und auf der einen Seite des Körpers (1) koaxial zur Querachse (4) drehbar angebracht ist und der einerseits über eine Verbindungsfeder (36) in Richtung zum Öffnen des Kanals (2) zusammen mit dem Betätigungsnocken (13) und der Verschlußvorrichtung (3) und gegen eine (24) der beiden Federn (21, 24) zum Rückstellen der Verschlußvorrichtung (3) in Richtung zum Schließen des Kanals (2) drehangetrieben ist, wobei die die Feder (24) zum Rückstellen und Spannen eines Schließelements (30) bildende Feder den Schließnocken (25) mit einer Betätigungseinrichtung (39) des Sicherheitssystems verbindet, und der andererseits in Richtung zum Schließen des Kanals (2) zusammen mit der Verschlußvorrichtung (3) und unabhängig von dem Betätigungsnocken (13) gegen die Verbindungsfeder (36) und über die Sicherheitsbetätigungseinrichtung (39) einen Zug auf das Schließelement (30) ausübt, wenn das Sicherheitssystem aktiviert ist, dadurch gekennzeichnet, daß die Verbindungsfeder (36) zwischen dem Betätigungsnocken (13) und einem Ansatz (10) angebracht ist, der mit einem auf der einen Seite des Körpers (1) vorspringenden Abschnitt (5) der Achse (4) der Verschlußvorrichtung (3) einstückig ist, und daß die Rückstellfeder (24) des Schließnockens (25) zwischen diesem und dem Ansatz (10) angebracht ist.

2. Drosselklappenkörper nach Anspruch 1, dadurch gekennzeichnet, daß der Ansatz (10) zwischen den beiden Nocken (13, 25) angeordnet ist und der Schließnocken (25) um den von dem Körper (1) nach außen vorspringenden Abschnitt (5) der Achse (4) der Verschlußvorrichtung (3) drehbar angebracht ist.

3. Drosselklappenkörper nach einem der Ansprüche 1 und 2, dadurch gekennzeichnet, daß der Ansatz (10) einen Hebel (6) trägt, der in der Stellung maximalen Schließens der Verschlußvorrichtung (3) gegen einen von dem Körper (1) getragenen Bremsanschlag (8) zu Anlage kommt.

4. Drosselklappenkörper nach einem der Ansprüche 1 bis 3, dadurch gekennzeichnet, daß der Betätigungsnocken (13) drehbar auf einem Achsabschnitt (17) angebracht ist, der zur Achse (4) der Verschlußvorrichtung (3) koaxial verläuft und von einem mit dem Körper (1) einstückigen Träger (18) gehalten wird, wobei die zweite Feder (21) zum Rückstellen der Verschlußvorrichtung (3) in Richtung zum Schließen des Kanals (2) zwischen dem Betätigungsnocken (13) und dem Träger (18) angebracht ist.

5. Drosselklappenkörper nach Anspruch 4, dadurch gekennzeichnet, daß der Betätigungsnocken (13) einen Arm (20) aufweist, der in der Stellung maximalen Öffnens der Verschlußvorrichtung (3) gegen einen von dem Träger (18) gehaltenen Anschlag (38) für maximalen Gasaustritt zur Anlage kommt.

6. Drosselklappenkörper nach einem der Ansprüche 4 und 5, dadurch gekennzeichnet, daß der Betätigungsnocken (13) einen axial zur Achse (4) der Verschlußvorrichtung (3) vorspringenden, exzentrischen Anschlag (12) aufweist, der gegen einen axial auf der Achse (4) der Verschlußvorrichtung (3) vorspringenden, exzentrischen Anschlag (11) zu deren formschlüssigem Antrieb über den Betätigungsnocken (13) in Richtung zum Öffnen des Kanals (2) zur Anlage kommt.

7. Drosselklappenkörper nach einem der Ansprüche 1 bis 6, dadurch gekennzeichnet, daß der Körper (1) zur Begrenzung des Durchlaufwinkels des Schließnockens (25) einen auf der Seite der Nocken (13, 25) vorspringenden Anschlag (35) aufweist.

8. Drosselklappenkörper nach einem der Ansprüche 1 bis 7, dadurch gekennzeichnet, daß die beiden Federn (21, 24) zum Rückstellen der Verschlußvorrichtung (3) in Richtung zum Schließen des Kanals (2) und die Verbindungsfeder (36) Schraubenfedern sind, wobei insbesondere die Verbindungsfeder (36) eine Federsteife aufweist, die größer ist als das von dem dynamischen Druck auf die Verschlußvorrichtung (3) erzeugte Gegenmoment.

9. Drosselklappenkörper nach einem der Ansprüche 1 bis 8, dadurch gekennzeichnet, daß jeder der beiden Nocken (13, 25) aus Kunststoff besteht und auf einen Kreisabschnitt begrenzt ist und der Ansatz (10) der Achse (4) der Verschlußvorrichtung (3) ein Formteil aus Kunststoff ist.

## Claims

1. A gas control device for an internal combustion engine of a motor vehicle equipped with at least one security system such as an anti-skid system, the said gas control device comprising:
- a body (1) traversed by at least one passage (2) in which at least one occluding device (3), substantially in the form of a disc or butterfly, is mounted to rotate about an spindle (4) crosswise to the passage (2),
- a gas control cam (13) mounted to rotate coaxially with the transverse spindle (4), outside and on one side of the body (1) and caused to rotate by a gas control member (19) such as a traction cable when the accelerator pedal (37) is depressed, driving by itself the spindle (4) and the occluding means (3) to rotate in the direction of opening of the passage (2), against two springs (21, 24) for restoring the occluding means (3) in rotation in the direction of closure of the passage (2), and
- a security reclosing cam (25) likewise mounted to rotate coaxially with the transverse spindle (4), outside and on the said side of the body (1) and driven to rotate on the one hand in the direction of opening of the passage (2), jointly with the gas operating cam (13) and the occluding means (3) by the effect ofa connecting spring (36) and against one (24) ofthe two springs (21, 24) for restoring the occluding means (3) in the direction of closure ofthe passage (2), the said spring constituting a restoring spring (24) adapted to tension a reclosing member (30) connecting the reclosing cam (25) to a device (39) for actuating the security system and, on the other, in the direction of closure of the passage (2) jointly with the occluding means (3) and independently ofthe gas control cam (13), against the connecting spring (36) and by the effect of the security actuating device (39) exerting traction on the reclosing member (30), when the security system is activated, characterised in that the connecting spring (36) is mounted between the gas control cam (13) and an end ferrule (10) rigid with a portion (5) of the spindle (4) ofthe occluding means (3) which projects on the said side of the body (1) and the restoring spring (24) of the reclosing cam (25) is mounted between this latter and the end ferrule (10).

2. A gas control device according to claim 1, characterised in that the end ferrule (10) is disposed between the two cams (13, 25) and the reclosing cam (25) is mounted to rotate about the said portion (5) of the spindle (4) of the occluding device (3) projecting towards the outside of the device (1).

3. A gas control device according to one of claims 1 and 2, characterised in that the end ferrule (10) carries a lever (6) which in the position of maximum closure of the occluding means (3), bears against a retarding abutment (8) carried by the body (1).

4. A gas control device according to one of claims 1 to 3, characterised in that the gas control cam (13) is mounted to rotate on a portion of spindle (17) coaxial with the spindle (4) of the occluding means (3) and carried by a support (18) fixed to the body (1), the second restoring spring (21) of the occluding means (3) in the direction of closure of the passage (2) being mounted between the gas control cam (13) and the support (18).

5. A gas control device according to claim 4, characterised in that the gas control cam (13) has an arm (20) which in the position of maximum opening of the occluding means (3) bears against a maximum gas flow abutment (38) carried by the support (18).

6. A gas control device according to one of claims 4 and 5, characterised in that the gas control cam (13) has an eccentric abutment (12) projecting axially towards the spindle (4) of the occluding means (3) and which comes to bear against an axially projecting eccentric abutment (11) on the spindle (4) of the occluding means (3) for positive entrainment of this latter by the gas control cam (13) in the direction of opening of the passage (2).

7. A gas control device according to any one of claims 1 to 6, characterised in that the body (1) has an abutment (35) projecting on the side of the cams (13, 25) to limit the angular travel of the reclosing cam (25).

8. A gas control device according to any one of claims 1 to 7, characterised in that the two restoring springs (21, 24) of the occluding means (3) in the direction of closure of the passage (2) and the connecting spring (36) are helical springs such that the connecting spring (36) has a stiffness which is greater than the resistant torque created by the dynamic pressure of the gas on the occluding means (3).

9. A gas control device according to any one of claims 1 to 8, characterised in that each ofthe two cams (13, 25) is of a plastics material and is limited to a circular segment and in that the end ferrule (10) on the spindle (4) on the occluding means (3) is an over-moulding of plastics material.
